(19) **Europäisches Patentamt / European Patent Office / Office européen des brevets**

(11) **EP 2 376 943 B1**

(12) **FASCICULE DE BREVET EUROPEEN**

(45) Date de publication et mention
de la délivrance du brevet:
**22.11.2017 Bulletin 2017/47**

(21) Numéro de dépôt: **10706699.5**

(22) Date de dépôt: **11.01.2010**

(51) Int Cl.:
*H01J 43/30* (2006.01)     *H01J 43/24* (2006.01)

(86) Numéro de dépôt international:
**PCT/FR2010/050037**

(87) Numéro de publication internationale:
**WO 2010/079312 (15.07.2010 Gazette 2010/28)**

(54) **DISPOSITIF DE MESURE ET DE TRAITEMENT D'UN SIGNAL D'ENTREE DE GRANDE DYNAMIQUE, DETECTEUR DE FUITES ET PROCEDE DE MESURE ET DE TRAITEMENT CORRESPONDANTS**

VORRICHTUNG ZUM MESSEN UND VERARBEITEN EINES HOCHDYNAMISCHEN EINGABESIGNALS, UND ENTSPRECHENDER LÜCKENDETEKTOR UND MESS- UND VERARBEITUNGSVERFAHREN

DEVICE FOR MEASURING AND PROCESSING A HIGH DYNAMIC INPUT SIGNAL, AND CORRESPONDING LEAK DETECTOR AND MEASURING AND PROCESSING METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.01.2009 FR 0900109**

(43) Date de publication de la demande:
**19.10.2011 Bulletin 2011/42**

(73) Titulaire: **Pfeiffer Vacuum
74000 Annecy (FR)**

(72) Inventeur: **JOURDAN, Pascal
F-74000 Annecy (FR)**

(74) Mandataire: **Croonenbroek, Thomas Jakob
Innovincia
11, avenue des Tilleuls
74200 Thonon-les-Bains (FR)**

(56) Documents cités:
**EP-A- 0 402 827        FR-A- 2 711 792
US-A1- 2006 080 045    US-B1- 6 177 665**

**Description**

La présente invention concerne un dispositif de mesure et de traitement d'un signal d'entrée de grande dynamique, un détecteur de fuites et un procédé de mesure et de traitement correspondants.

Les multiplicateurs d'électrons sont des composants qui ont une fonction d'amplification. Leur gain généralement très important, peut aller jusqu'à $10^5$. Ils sont utilisés dans des applications diverses où l'on traite des signaux très faibles. On citera, entre autres, la mesure d'énergie lumineuse (photomultiplicateurs) dans le visible ou l'invisible, les intensificateurs d'image, la mesure de rayonnement nucléaire (chambres à ionisation), la spectrométrie de masse et en particulier la détection de fuite à l'hélium.

Dans ces applications, les signaux à traiter présentent dans certains cas une dynamique de l'ordre de $10^8$. Il est donc nécessaire d'avoir une chaîne de mesure qui comprend le multiplicateur d'électrons et un amplificateur compresseur de signal. Cet élément ne peut pas, à lui seul, réduire suffisamment la dynamique de sortie. Il est alors nécessaire d'intervenir sur le gain du multiplicateur d'électrons pour réaliser une compression supplémentaire. Cela est obtenu par action sur sa tension d'alimentation. Dans des dispositifs connus, le gain de la chaîne de mesure, notamment par action sur ladite tension d'alimentation est commandé de manière discontinue, soit manuellement par l'emploi d'un commutateur soit dans des systèmes plus évolués, par commutation électronique automatique ou par des chaînes de mesure multiples. Cette discontinuité dans les fonctions de transfert engendre des effets indésirables tels que des temps de réponse importants ou des instabilités lorsque le signal est à la limite de deux gammes d'amplification.

On connaît déjà du document EP 0 402 827, un dispositif de traitement du signal reçu par un multiplicateur d'électrons, permettant une mesure continue du signal sur une grande dynamique, comportant un multiplicateur d'électrons recevant le signal d'entrée Io, une alimentation haute tension du multiplicateur pourvue d'un circuit de commande, une boucle de rétroaction comportant un amplificateur compresseur délivrant le signal de sortie et agissant également sur le circuit de commande de manière à faire varier le gain du multiplicateur d'électrons de façon continue sur la dynamique de mesure, en fonction du signal de sortie IoG du multiplicateur d'électrons.

Le dispositif ainsi réalisé permet de traiter un signal d'entrée à forte dynamique pour obtenir un signal de sortie linéaire exploitable pouvant représenter le signal d'entrée reçu par le multiplicateur d'électrons sur une large plage du signal d'entrée allant jusqu'à huit décades.

L'alimentation haute tension détermine le gain du multiplicateur d'électrons. Cette alimentation est modulée par le circuit de commande recevant le signal de sortie du dispositif. Pour cela, le circuit de commande comporte des paramètres de gain et de décalage réglables qui définissent la plage du signal de sortie.

Pour régler ces paramètres de gain et de décalage, le procédé classique consiste à injecter deux courants d'entrée différents et à ajuster les paramètres de gain et de décalage correspondants pour chaque valeur du courant d'entrée.

Toutefois, ce réglage n'est pas immédiat. En effet, les paramètres de gain et de décalage du circuit de commande sont interdépendants et s'influencent mutuellement. Autrement dit, le réglage du paramètre de gain du circuit de commande entraîne la modification à la fois du décalage et du gain de la plage du signal de sortie. De même, le réglage successif du paramètre de décalage du circuit de commande entraîne la modification à la fois du décalage et du gain de la plage du signal de sortie. L'interdépendance de ces deux paramètres requiert un réglage fin des paramètres du circuit de commande nécessitant un certain nombre d'itérations pour parvenir à la plage du signal de sortie voulue. Ce réglage peut s'avérer relativement long étant donné que plusieurs minutes peuvent être nécessaires pour obtenir une stabilisation satisfaisante du signal de sortie IoG après chaque modification du courant d'entrée Io injecté.

Le but de la présente invention est donc de proposer un dispositif de mesure et de traitement d'un signal d'entrée de grande dynamique, un détecteur de fuites et un procédé de mesure et de traitement correspondants, qui ne présentent pas ces inconvénients.

A cet effet, l'invention a pour objet un détecteur de fuites selon la revendication 1. La détermination de l'exposant du gain du multiplicateur d'électrons préalablement à la détermination des valeurs de paramètres de gain et de décalage théoriques du circuit de commande permet de déterminer précisément ceux-ci sans avoir besoin de réaliser de nombreuses mesures itératives.

Suivant d'autres caractéristiques du dispositif de mesure et de traitement,

- lesdits moyens de mesure et de calculs sont aptes à faire varier la tension d'alimentation et à mesurer un signal représentatif du signal de sortie du multiplicateur d'électrons correspondant pour chaque tension d'alimentation, pour calculer la valeur de l'exposant du gain exponentiel du multiplicateur d'électrons à partir des valeurs mesurées,
- les moyens de mesure et de calculs sont aptes à mesurer un signal représentatif du signal de sortie du multiplicateur d'électrons et le signal de sortie de l'alimentation, en fonction de deux signaux d'entrée prédéterminés appliqués à l'entrée du multiplicateur d'électrons, pour calculer les valeurs des paramètres de gain et de décalage du circuit de commande à appliquer, à partir des valeurs des signaux mesurés et de la valeur dudit exposant déterminée,
- l'amplificateur compresseur logarithmique comporte un amplificateur et un compresseur logarithmique, la sortie dudit amplificateur étant reçue en entrée dudit compresseur logarithmique, et les moyens de mesure et de calculs sont aptes à mesurer des signaux de sortie de l'amplificateur du compresseur logarithmique pour déterminer un signal représentatif du signal de sortie du multiplicateur d'électrons,

- ledit dispositif comporte des moyens pilotables pour appliquer au moins un signal d'entrée prédéterminé et une unité de traitement pour piloter lesdits moyens de mesure et de calculs et lesdits moyens pilotables de manière automatique et pour réaliser ledit compresseur logarithmique et le circuit de commande par un programme d'ordinateur,
- le dispositif comporte un moyen d'injection calibrée de gaz relié à une électrovanne desdits moyens pilotables.

L'invention a encore pour objet un procédé de mesure et de traitement d'un signal d'entrée mis en oeuvre dans un détecteur de fuites tel que décrit précédemment, caractérisé en ce qu'on détermine la valeur de l'exposant du gain exponentiel du multiplicateur d'électrons pour calculer les valeurs des paramètres de gain et de décalage dudit circuit de commande à partir de la valeur dudit exposant déterminée.

Suivant d'autres caractéristiques du procédé de mesure et de traitement,

- pour déterminer la valeur de l'exposant du gain exponentiel dudit multiplicateur d'électrons,

  - on applique un courant prédéterminé en entrée du multiplicateur d'électrons,
  - on fait varier la tension d'alimentation dudit multiplicateur et,
  - on mesure la tension de sortie de l'amplificateur du compresseur logarithmique représentative du signal de sortie dudit multiplicateur,

  de manière à déterminer la pente d'une relation linéaire entre la tension de sortie de l'amplificateur et la tension d'alimentation, correspondant à la valeur de l'exposant du gain exponentiel dudit multiplicateur d'électrons,
- on mesure un signal représentatif du signal de sortie du multiplicateur d'électrons et le signal de sortie de l'alimentation, en fonction de deux signaux d'entrée prédéterminés appliqués à l'entrée du multiplicateur d'électrons, pour calculer les valeurs des paramètres de gain et de décalage du circuit de commande à appliquer, à partir des valeurs des signaux mesurés et de la valeur dudit exposant déterminée.

D'autres avantages et caractéristiques apparaîtront à la lecture de la description de l'invention, ainsi que des dessins annexés sur lesquels :

- la figure 1 représente un diagramme d'un dispositif de mesure et de traitement,
- la figure 2 représente un multiplicateur d'électrons du type « galette à microcanaux »,
- la figure 3 est une vue en coupe partielle de la galette à microcanaux de la figure 2 et,
- la figure 4 est un graphique représentant un exemple d'un signal de sortie du dispositif de mesure et de traitement en fonction d'un signal d'entrée correspondant sur une échelle logarithmique.

Sur ces figures, les éléments identiques portent les mêmes numéros de référence.

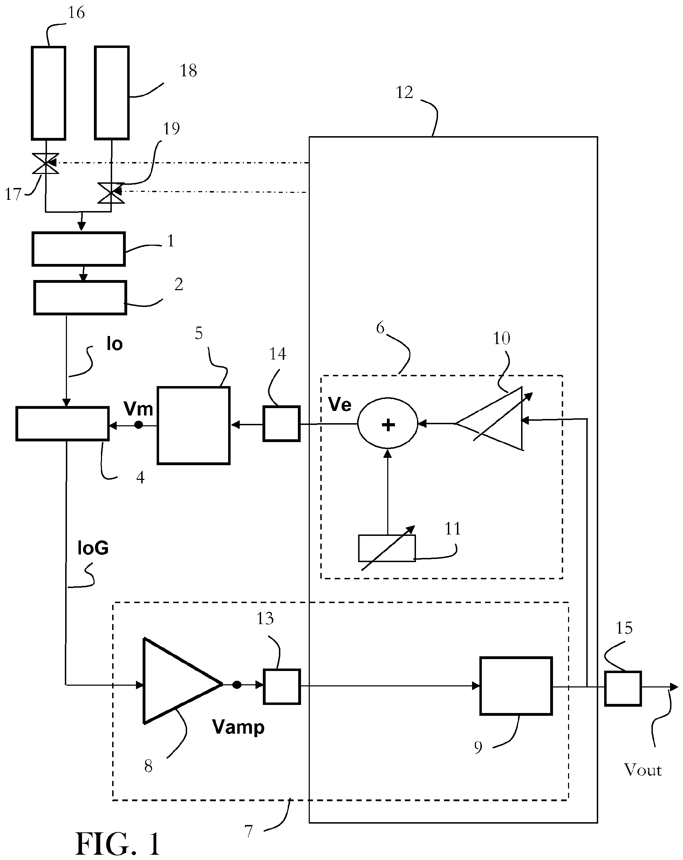

La figure 1 représente un dispositif de mesure et de traitement d'un signal d'entrée lo d'au moins deux décades, c'est-à-dire de grande dynamique.

Le dispositif de mesure et de traitement trouve application notamment dans un domaine particulier de la spectrométrie de masse qui concerne la détection de fuite à l'hélium. Il s'agit de mesurer la pression partielle d'hélium contenue dans l'atmosphère résiduelle d'une enceinte dont on désire vérifier l'étanchéité. Deux cas se présentent couramment. Si l'enceinte est d'un volume important, on utilise une pompe pour y faire le vide, on crée une atmosphère environnant cette enceinte enrichie d'hélium, gaz témoin, et on analyse le gaz pompé en vérifiant s'il est lui aussi, enrichi en hélium. Si l'enceinte est petite, un boîtier par exemple, on commence par mettre ce boîtier en surpression d'hélium dans une chambre, puis on la dispose dans une deuxième chambre où on fait le vide. On analyse le gaz pompé de la même manière pour vérifier s'il est enrichi en hélium.

Pour cela, on utilise un détecteur de fuites comportant des moyens d'ionisation 1 pour ioniser le flux de gaz incident, un spectromètre de masse 2 pour dévier le flux de gaz ionisé, ainsi que le dispositif de mesure et de traitement.

Le spectromètre de masse 2 comprend un filtre dont le but est de dévier spatialement les molécules de gaz préalablement ionisées par les moyens d'ionisation 1 en fonction de leur rapport m/q, où m est la masse de la molécule et q sa charge.

Dans l'exemple considéré, le spectromètre 2 est calé sur le pic d'hélium. A la sortie de ce filtre spatial, les ions d'hélium incidents sont convertis en électrons puis multipliés pour créer un courant électronique IoG qui sera traité pour obtenir un signal de sortie du dispositif Vout.

Le dispositif comporte un multiplicateur d'électrons 4 ayant un gain variant exponentiellement en fonction de sa tension d'alimentation Vm et recevant le signal d'entrée Io, une alimentation haute tension 5 fournissant la tension d'alimentation Vm au multiplicateur 4, un circuit de commande 6 de l'alimentation 5, définissant une plage du signal de sortie du dispositif en faisant varier le gain exponentiel du multiplicateur 4, et un amplificateur compresseur logarithmique 7.

La sortie de l'amplificateur compresseur logarithmique 7 est d'une part, reçue en entrée du circuit de commande 6 pour faire varier le gain exponentiel du multiplicateur d'électrons 4 de façon continue sur la dynamique de mesure, en fonction du signal de sortie IoG du multiplicateur d'électrons 4, et forme d'autre part, le signal de sortie du dispositif Vout.

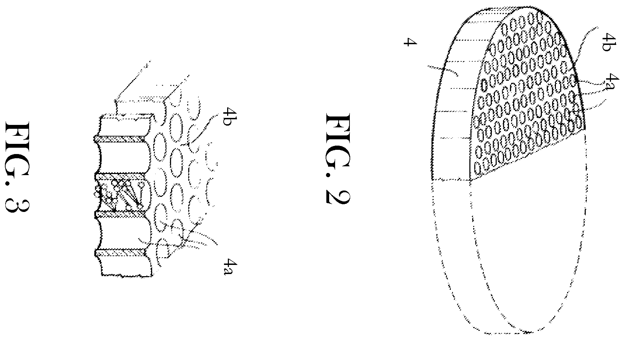

Le multiplicateur d'électron 4 est par exemple une galette à microcanaux représentée sur les figures 2 et 3. La galette à microcanaux transforme un flux de particules provenant du spectromètre de masse 2, en un flux d'électrons incidents et agit sur ce flux d'électrons incidents comme un multiplicateur d'électrons.

La galette à microcanaux comprend une multitude de microcanaux 4a disposés approximativement dans l'axe du flux incident. Chaque microcanal 4a est un multiplicateur d'électrons élémentaire. Le microcanal 4a est revêtu d'une couche à grande résistivité dont le coefficient d'émission secondaire est supérieur à l'unité.

Ainsi, un électron incident par chocs successifs et progression dans le microcanal 4a génère à la sortie de la galette un nombre d'électrons important. Ce nombre d'électrons correspond à un gain.

L'ensemble des microcanaux 4a est connecté électriquement par le revêtement d'une couche métallique 4b sur chacune des deux faces planes de la galette. La tension d'alimentation Vm issue de l'alimentation haute tension 5 est appliquée entre ses deux faces. La tension d'alimentation Vm est généralement comprise entre 400 et 1 500 volts. C'est elle qui détermine le gain du multiplicateur d'électrons. La tension d'alimentation Vm est par exemple proportionnelle au signal Ve appliqué sur l'entrée de l'alimentation 5, issue du circuit de commande 6 (relation (1))

$$(1) \; Vm = KVm*Ve \qquad (KVm : \text{facteur proportionnel constant})$$

Le gain de la galette à microcanaux, de l'ordre de $10^4$ à $10^5$, est une fonction exponentielle de la tension d'alimentation Vm qui lui est appliquée.

Selon un premier mode de réalisation, le gain exponentiel du multiplicateur 4 correspond à a*Vm$^b$ où a correspond à un facteur multiplicateur et b correspond à l'exposant du gain exponentiel. Le gain exponentiel est donc proportionnel au produit de la tension d'alimentation Vm par lui-même b fois.

Le multiplicateur d'électrons 4 recevant le flux de particules, peut être suivi d'un collecteur d'électrons (non représenté) qui produit un courant électronique IoG, selon la relation (2).

$$(2) : IoG = a*Vm^b*Io$$

Ce courant IoG est injecté sur l'amplificateur compresseur 7 qui amplifie le signal IoG et en effectue une compression de manière à en réduire la dynamique. Le signal de sortie Vout de cet amplificateur compresseur 7 peut ensuite être exploité. Le dispositif comporte par exemple des moyens d'affichage du signal de sortie pour afficher le signal de sortie Vout.

Comme représenté sur la figure 1, l'amplificateur compresseur logarithmique 7 comporte un amplificateur 8 et un compresseur logarithmique 9. La sortie Vamp de l'amplificateur 8 est reçue en entrée du compresseur logarithmique 9 et correspond au courant électronique IoG amplifié d'un gain constant Kamp, selon la relation (3) issue de la relation (2) :

$$(3) : Vamp = Kamp*a*Vm^b*Io$$

Le compresseur logarithmique 9 assure une fonction de compression de la sortie Vamp, de sorte que le signal de sortie Vout correspond à Log (Vamp) (relation (4)).

$$(4) \; Vout = Log \, (Vamp)$$

L'alimentation haute tension 5 du multiplicateur d'électrons 4 est modulée par le circuit de commande 6 recevant le signal de sortie Vout. Ainsi, la tension d'alimentation Vm est maximale quand le courant électronique IoG est minimal ou nul, et minimal lorsque le courant électronique IoG est maximal. Il en résulte une compression supplémentaire de la dynamique de la chaîne de mesure.

L'amplificateur compresseur 7 étant un amplificateur logarithmique, le circuit de commande 6 de l'alimentation 5 du multiplicateur 4 est un amplificateur linéaire tel que la haute tension Vm produite par l'alimentation 5 soit une fonction linéaire du signal de sortie Vout. Pour définir la plage du signal de sortie du dispositif, le circuit de commande d'amplification linéaire 6 comporte un paramètre de gain 10 et un paramètre de décalage 11 (ou « offset » en anglais), réglables. On a la relation (5).

$$(5) : Ve = \text{paramètre de gain} * Vout + \text{paramètre de décalage}$$

Par exemple, le circuit de commande 6 et l'amplificateur compresseur 7 sont des circuits électroniques analogiques et les paramètres de gain 10 et de décalage 11 sont réglables par des potentiomètres. L'amplificateur 8 est par exemple un amplificateur opérationnel.

On peut aussi prévoir que le compresseur logarithmique 9 et le circuit de commande 6 soient réalisés par un programme d'ordinateur mis en oeuvre dans une unité de traitement 12 comportant un microprocesseur.

Le dispositif comporte alors un convertisseur analogique numérique 13 en sortie de l'amplificateur 8 et à l'entrée du compresseur 9, un convertisseur numérique analogique 14 à l'entrée de l'alimentation 5 pour produire le signal analogique Ve et un convertisseur numérique analogique 15 à la sortie Vout du dispositif.

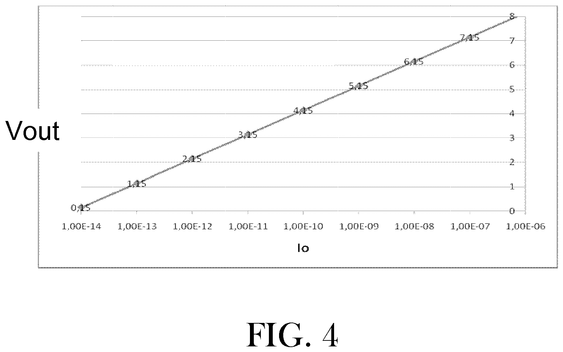

La figure 4 représente un exemple du signal de sortie Vout d'un dispositif de traitement du signal pour un détecteur de fuites, en fonction d'un signal d'entrée Io correspondant sur une abscisse d'échelle logarithmique selon le premier mode de réalisation. La relation entre le signal de sortie Vout et le logarithme du courant d'entrée Io est linéaire.

Le dispositif de traitement permet ainsi de convertir un flux incident d'ions hélium ayant une dynamique de $10^8$ (variant approximativement entre $10^{-14}$ et $10^{-6}$ ampère) en un courant électronique IoG et d'amplifier ce courant électronique pour produire un signal de sortie Vout dont la plage du signal de sortie est comprise entre 0 et 8 V.

Ainsi, le dispositif permet de traiter un signal d'entrée à forte dynamique pour obtenir un signal de sortie linéaire Vout exploitable permettant de représenter le signal d'entrée reçu par le multiplicateur d'électrons 4 sur une large plage d'un signal d'entrée de huit décades.

Le dispositif comporte en outre des moyens de mesure et de calculs pour déterminer la valeur de l'exposant b du gain exponentiel du multiplicateur d'électrons 4 et pour calculer les valeurs des paramètres de gain 10 et de décalage 11 du circuit de commande 6 à partir de la valeur de l'exposant b déterminée.

Par exemple, les moyens de mesure et de calculs sont aptes à faire varier la tension d'alimentation Vm et à mesurer un signal représentatif du signal de sortie IoG du multiplicateur d'électrons 4 correspondant pour chaque tension d'alimentation Vm, pour calculer la valeur de l'exposant b du gain exponentiel du multiplicateur d'électrons 4 à partir des valeurs mesurées.

Pour faciliter la mesure, on prévoit que les moyens de mesure et de calculs peuvent mesurer des signaux de sortie Vamp de l'amplificateur 8 représentatifs du signal de sortie IoG du multiplicateur d'électrons 4.

Le dispositif peut également comporter des moyens pilotables pour appliquer le signal d'entrée prédéterminé Io et faire varier la tension d'alimentation Vm, de sorte que l'unité de traitement 12 puisse piloter les moyens de mesure et de calculs et les moyens pilotables de manière automatique.

Par exemple, le dispositif comporte au moins un moyen d'injection calibrée de gaz 16 relié à une électrovanne 17 des moyens pilotables. Ainsi, les moyens pilotables peuvent commander l'ouverture de l'électrovanne 17 en aval du moyen d'injection calibrée de gaz 16. Le flux de gaz est alors dirigé vers les moyens d'ionisation 1 et le spectromètre de masse 2, pour appliquer un flux incident Io d'ions prédéterminé sur le multiplicateur d'électrons 4.

On peut prévoir également que les moyens de mesure et de calculs sont aptes à mesurer un signal représentatif du signal de sortie du multiplicateur d'électrons, tel que le signal de sortie de l'amplificateur Vamp1, Vamp2, et le signal de sortie de l'alimentation Vm1, Vm2, en fonction de deux signaux d'entrée prédéterminés IoPF, IoGF appliqués à l'entrée du multiplicateur d'électrons 4. A partir des valeurs des signaux mesurés et de la valeur de l'exposant b déterminée, les moyens de mesure et de calculs peuvent calculer les valeurs des paramètres de gain 10 et de décalage 11 du circuit de commande 6 à appliquer.

Par exemple, le dispositif comporte des moyens pilotables par l'unité de traitement 12 pour appliquer deux signaux d'entrée prédéterminés IoPF, IoGF de manière automatique.

Le premier signal d'entrée prédéterminé IoPF correspond par exemple à une petite injection de gaz calibrée et le deuxième signal d'entrée prédéterminé IoGF correspond à une plus grosse injection calibrée de gaz, tel qu'au moins une centaine de fois supérieure à la petite injection.

Comme décrit précédemment, le dispositif peut ainsi comporter deux moyens d'injection calibrées de gaz 16, 18, reliées à des électrovannes 17, 19 respectives des moyens pilotables.

En fonctionnement, le procédé de mesure et de traitement d'un signal d'entrée de grande dynamique mis en oeuvre dans le dispositif de mesure et de traitement d'un signal d'entrée de grande dynamique comporte les étapes suivantes.

On détermine la valeur de l'exposant b du gain exponentiel du multiplicateur d'électrons 4 pour calculer les valeurs des paramètres de gain 10 et de décalage 11 du circuit de commande 6 à partir de la valeur de l'exposant b déterminée.

La détermination de l'exposant b du gain du multiplicateur d'électrons 4 préalablement à la détermination des valeurs de paramètres de gain 10 et de décalage 11 théoriques du circuit de commande 6 permet de déterminer précisément ceux-ci sans avoir besoin de réaliser de nombreuses mesures itératives.

Par exemple, pour déterminer la valeur de l'exposant b du gain exponentiel du multiplicateur d'électrons 4, on commence par appliquer un courant prédéterminé Io en entrée du multiplicateur d'électrons 4.

Puis, on fait varier la tension d'alimentation Vm du multiplicateur 4, par exemple en modifiant la consigne de Ve dans le programme d'ordinateur réalisant le circuit de commande 6 et on mesure la tension de sortie de l'amplificateur du compresseur logarithmique Vamp représentative du signal de sortie IoG du multiplicateur 4.

On déduit la relation (6) de la relation (3), de sorte que la pente de la relation linéaire entre le logarithme de la tension de sortie de l'amplificateur Vamp et le logarithme de la tension d'alimentation, corresponde à la valeur de l'exposant b du gain exponentiel du multiplicateur d'électrons 4.

$$(6) : \text{Log (Vamp)} = \text{Log (Kamp)} + \text{Log (Io)} + \text{Log (a)} + b*\text{Log (Vm)}$$

On détermine alors la pente de la relation linéaire entre Log (Vamp) et Log (Vm), correspondant à la valeur de l'exposant b du gain exponentiel du multiplicateur d'électrons 4.

Au lieu de mesurer la sortie Vm de l'alimentation 5, on peut utiliser l'entrée Ve de l'alimentation 5 connue, puisque la sortie Vm de l'alimentation 5 est proportionnelle à l'entrée Ve de l'alimentation 5 (relation (1)). La pente de la relation linéaire Log (Vamp) en fonction de Log (Ve), correspond à la valeur de l'exposant b du gain exponentiel du multiplicateur d'électrons 4. Toutefois, la mesure de la tension Vm de sortie de l'alimentation 5 permet de déterminer la valeur de l'exposant b du gain exponentiel du multiplicateur d'électrons 4 plus précisément.

Connaissant la valeur de l'exposant b du gain exponentiel du multiplicateur d'électrons 4, le procédé peut comporter une étape successive dans laquelle on détermine les valeurs des paramètres de gain 10 et de décalage 11 du circuit de commande 6 de manière théorique.

Pour cela, on applique un premier courant prédéterminé IoGF, correspondant par exemple, à un signal d'une grosse injection calibrée de gaz, à l'entrée du multiplicateur d'électrons 4.

On désigne par VampGF, le signal de sortie de l'amplificateur 8, par VmGF, le signal de sortie de l'alimentation 5 et par VoutGF, le signal de sortie du dispositif, avec le courant prédéterminé IoGF et les paramètres de gain et de décalage théoriques pour obtenir le signal VoutGF souhaité. On désigne par Vamp0, le signal de sortie initial de l'amplificateur 8 et par Vm0, le signal de sortie de l'alimentation 5, avec le courant prédéterminé IoPF et les paramètres de gain et de décalage initiaux.

On mesure le signal de sortie du multiplicateur d'électrons Vamp0 et le signal de sortie de l'alimentation Vm0. On a représenté les deux points de mesure par des points sur la figure 1.

A partir de la relation (3) appliquée pour VampGF et Vamp0, on déduit la relation (7).

$$(7) : \text{VeGF} = (\text{VampGF}/\text{Vamp0})^{1/b}*\text{Ve0}$$

En outre VampGF peut être déduit de la relation (4).

Donc, connaissant Vm0 (et donc Ve0 d'après la relation (1)), Vamp0, b et VoutGF voulue, il est possible de déterminer VeGF.

Puis, on applique un deuxième courant prédéterminé IoPF, correspondant par exemple, à un signal d'une plus petite injection calibrée de gaz, à l'entrée du multiplicateur d'électrons 4.

On désigne par VoutPF, le signal de sortie du dispositif souhaité avec le courant prédéterminé IoPF et les paramètres de gain et de décalage théoriques. On désigne par Vamp1, le signal de sortie de l'amplificateur 8 et par Vm1, le signal de sortie de l'alimentation 5, avec le courant prédéterminé IoPF et les paramètres de gain et de décalage initiaux.

En appliquant le même raisonnement que précédemment pour le premier courant prédéterminé IoGF, il est possible de déterminer VePF en connaissant Vm1, Vamp1, b et VoutPF voulue.

Ensuite, on calcule les valeurs théoriques des paramètres de gain 10 et de décalage 11 à appliquer, à partir des valeurs des signaux souhaités VoutGF, VoutPF, des valeurs calculées VeGF et VePF et de la valeur de l'exposant b déterminée du gain exponentiel.

En effet, on cherche à calculer les paramètres de gain 10 et de décalage 11 du circuit de commande 6 pour les deux courants IoGF et IoPF. Or, on peut calculer les paramètres de gain et de décalage d'après la relation (5) appliquée à VeGF et VePF, puisque VeGF et Ve PF ont été déterminés.

Selon un deuxième mode de réalisation, le gain exponentiel du multiplicateur 4 correspond à A*exp(B*Vm) où A correspond à un facteur multiplicateur et B correspond à l'exposant du gain exponentiel. Le gain exponentiel est donc proportionnel à la fonction exponentielle de base e du produit de la tension d'alimentation Vm par l'exposant B.

La relation (2) devient (2').

$$(2') : IoG = A*exp\ (B*Vm)*Io$$

On obtient alors les relations (3') et (4') :

$$(3') : Vamp = Kamp*A*exp(B*Vm)*Io$$

$$(4') : Vout = ln\ (Vamp)\ (ln\ étant\ le\ logarithme\ népérien)$$

On déduit la relation (6') de la relation (3').

$$(6') : ln(Vamp) = ln(Kamp*A*Io) + B*Vm$$

On détermine alors la pente de la relation linéaire entre ln(Vamp) et Vm, correspondant à la valeur de l'exposant B du gain exponentiel du multiplicateur d'électrons 4.

Connaissant la valeur de l'exposant B du gain exponentiel du multiplicateur d'électrons 4, on détermine les valeurs des paramètres de gain 10 et de décalage 11 du circuit de commande 6 de manière théorique.

En effet, à partir de la relation (3') appliquée pour VampGF et Vamp0, il est possible de déterminer VeGF à partir de la relation (7') pour un premier courant prédéterminé IoGF.

$$(7') : VeGF=1/(B*KVm)*ln\ (VampGF/Vamp0)+Ve0$$

Puis, on applique un deuxième courant prédéterminé IoPF, pour déterminer VePF de la même manière.

Ensuite, on calcule les valeurs théoriques des paramètres de gain 10 et de décalage 11 à appliquer, à partir des valeurs des signaux souhaités VoutGF, VoutPF, des valeurs calculées VeGF et VePF et de la valeur de l'exposant B déterminée du gain exponentiel.

Par conséquent, la détermination de l'exposant b, B du gain exponentiel du multiplicateur d'électrons 4 préalablement à la détermination des valeurs de paramètres de gain 10 et de décalage 11 théoriques du circuit de commande 6 permet de déterminer précisément ceux-ci sans avoir besoin de réaliser de nombreuses mesures itératives.

## Revendications

1. Détecteur de fuites comportant des moyens d'ionisation (1) pour ioniser un flux de gaz incident, un spectromètre de masse (2) pour dévier le flux de gaz ionisé, un dispositif de mesure et de traitement d'un signal d'entrée d'au moins deux décades, comportant :

- un multiplicateur d'électrons (4) ayant un gain exponentiel en fonction de sa tension d'alimentation (Vm) et recevant ledit signal d'entrée (Io), l'entrée du multiplicateur d'électrons (4) étant reliée en sortie du spectromètre de masse (2),
- une alimentation (5) fournissant la tension d'alimentation (Vm) du dit multiplicateur (4),
- un circuit de commande (6) de l'alimentation (5), dont les paramètres de gain (10) et de décalage (11) sont réglables et définissent une plage du signal de sortie en faisant varier le gain exponentiel du dit multiplicateur (4),
- un amplificateur compresseur logarithmique (7) dont la sortie est d'une part, reçue en entrée du circuit de commande (6) pour faire varier le gain exponentiel du multiplicateur d'électrons (4) de façon continue sur la dynamique de mesure, en fonction du signal de sortie (IoG) du multiplicateur d'électrons (4), et formant d'autre part, le signal de sortie (Vout) dudit dispositif,

**caractérisé en ce qu'**il comporte en outre des moyens de mesure et de calculs pour déterminer la valeur de l'exposant (b, B) du gain exponentiel du multiplicateur d'électrons (4) et pour calculer les valeurs des paramètres de gain (10) et de décalage (11) dudit circuit de commande (6) à partir de la valeur dudit exposant (b, B) déterminée.

2. Détecteur de fuites selon la revendication 1, caractérisé en que lesdits moyens de mesure et de calculs sont aptes à faire varier la tension d'alimentation (Vm) et à mesurer un signal représentatif du signal de sortie (IoG) du multiplicateur d'électrons (4) correspondant pour chaque tension d'alimentation (Vm), pour calculer la valeur de l'exposant (b, B) du gain exponentiel du multiplicateur d'électrons (4) à partir des valeurs mesurées.

3. Détecteur de fuites selon l'une quelconque des revendications 1 ou 2, **caractérisé en ce que** les moyens de mesure et de calculs sont aptes à mesurer un signal représentatif du signal de sortie du multiplicateur d'électrons (Vamp1, Vamp2) et le signal de sortie de l'alimentation (Vm1, Vm2), en fonction de deux signaux d'entrée prédéterminés (IoPF, IoGF) appliqués à l'entrée du multiplicateur d'électrons (4), pour calculer les valeurs des paramètres de gain (10) et de décalage (11) du circuit de commande (6) à appliquer, à partir des valeurs des signaux mesurés et de la valeur dudit exposant (b, B) déterminée.

4. Détecteur de fuites selon l'une quelconque des revendications 1 à 3, dont l'amplificateur compresseur logarithmique (7) comporte un amplificateur (8) et un compresseur logarithmique (9), la sortie (Vamp) dudit amplificateur (8) étant reçue en entrée dudit compresseur logarithmique (9), **caractérisé en ce que** les moyens de mesure et de calculs sont aptes à mesurer des signaux de sortie de l'amplificateur du compresseur logarithmique (Vamp1, Vamp2) pour déterminer un signal représentatif du signal de sortie (IoG) du multiplicateur d'électrons (4).

5. Détecteur de fuites selon l'une quelconque des revendications 1 à 4, **caractérisé en ce qu'**il comporte des moyens pilotables pour appliquer au moins un signal d'entrée prédéterminé (Io) et **en ce qu'**il comporte une unité de traitement (12) pour piloter lesdits moyens de mesure et de calculs et lesdits moyens pilotables de manière automatique et pour réaliser ledit compresseur logarithmique (9) et le circuit de commande (6) par un programme d'ordinateur.

6. Détecteur de fuites selon la revendication 5, **caractérisé en ce qu'**il comporte un moyen d'injection calibrée de gaz (16, 18) reliée à une électrovanne (17, 19) desdits moyens pilotables.

7. Procédé de mesure et de traitement d'un signal d'entrée mis en oeuvre dans un détecteur de fuites selon l'une quelconque des revendications précédentes, **caractérisé en ce qu'**on détermine la valeur de l'exposant (b, B) du gain exponentiel du multiplicateur d'électrons (4) pour calculer les valeurs des paramètres de gain (10) et de décalage (11) dudit circuit de commande (6) à partir de la valeur dudit exposant (b, B) déterminée.

8. Procédé de mesure et de traitement selon la revendication 7, **caractérisé en ce que** pour déterminer la valeur de l'exposant (b, B) du gain exponentiel dudit multiplicateur d'électrons (4),

   - on applique un courant prédéterminé (Io) en entrée du multiplicateur d'électrons (4),
   - on fait varier la tension d'alimentation (Vm) dudit multiplicateur (4) et,
   - on mesure la tension de sortie de l'amplificateur du compresseur logarithmique (Vamp) représentative du signal de sortie (IoG) dudit multiplicateur 4,

   de manière à déterminer la pente d'une relation linéaire entre la tension de sortie de l'amplificateur (Vamp) et la tension d'alimentation (Vm), correspondant à la valeur dudit exposant (b, B) du gain exponentiel dudit multiplicateur d'électrons (4).

9. Procédé de mesure et de traitement selon l'une quelconque des revendications 7 ou 8, **caractérisé en ce qu'**on mesure un signal représentatif du signal de sortie du multiplicateur d'électrons (Vamp1, Vamp2) et le signal de sortie de l'alimentation (Vm1, Vm2), en fonction de deux signaux d'entrée prédéterminés (IoPF, IoGF) appliqués à l'entrée du multiplicateur d'électrons (4), pour calculer les valeurs des paramètres de gain (10) et de décalage (11) du circuit de commande (6) à appliquer, à partir des valeurs des signaux mesurés et de la valeur dudit exposant (b, B) déterminée.

**EP 2 376 943 B1**

**Patentansprüche**

1. Lecksucher, umfassend Ionisationsmittel (1) zum Ionisieren eines einströmenden Gasstroms, ein Massenspektrometer (2) zum Ablenken des ionisierten Gasstroms und eine Vorrichtung zur Messung und Verarbeitung eines Eingangssignals mit wenigstens zwei Dekaden, welche umfasst:

   - einen Elektronenvervielfacher (4), der eine exponentielle Verstärkung in Abhängigkeit von seiner Versorgungsspannung (Vm) aufweist und das Eingangssignal (Io) empfängt, wobei der Eingang des Elektronenvervielfachers (4) mit dem Ausgang des Massenspektrometers (2) verbunden ist,
   - eine Versorgungseinheit (5), welche die Versorgungsspannung (Vm) des Vervielfachers (4) liefert,
   - eine Steuerschaltung (6) zur Steuerung der Versorgungseinheit (5), deren Verstärkungs- (10) und deren Offset-Parameter (11) regelbar sind und einen Bereich des Ausgangssignals definieren, indem die exponentielle Verstärkung des Vervielfachers (4) variiert wird,
   - einen logarithmischen Kompressorverstärker (7), dessen Ausgang einerseits am Eingang der Steuerschaltung (6) empfangen wird, um die exponentielle Verstärkung des Elektronenvervielfachers (4) über dem Messdynamikbereich in Abhängigkeit von dem Ausgangssignal (IoG) des Elektronenvervielfachers (4) kontinuierlich zu variieren, und andererseits das Ausgangssignal (Vout) der Vorrichtung bildet, **dadurch gekennzeichnet, dass** er außerdem Mess- und Berechnungsmittel zum Bestimmen des Wertes des Exponenten (b, B) der exponentiellen Verstärkung des Elektronenvervielfachers (4) und zum Berechnen der Werte des Verstärkungs- (10) und des Offset-Parameters (11) der Steuerschaltung (6) aus dem bestimmten Wert des Exponenten (b, B) umfasst.

2. Lecksucher nach Anspruch 1, **dadurch gekennzeichnet, dass** die Mess- und Berechnungsmittel geeignet sind, die Versorgungsspannung (Vm) zu variieren und ein Signal zu messen, das für das entsprechende Ausgangssignal (IoG) des Elektronenvervielfachers (4) für jede Versorgungsspannung (Vm) repräsentativ ist, um den Wert des Exponenten (b, B) der exponentiellen Verstärkung des Elektronenvervielfachers (4) aus den gemessenen Werten zu berechnen.

3. Lecksucher nach einem der Ansprüche 1 oder 2, **dadurch gekennzeichnet, dass** die Mess- und Berechnungsmittel geeignet sind, ein für das Ausgangssignal des Elektronenvervielfachers repräsentatives Signal (Vamp1, Vamp2) und das Ausgangssignal der Versorgungseinheit (Vm1, Vm2) in Abhängigkeit von zwei vorbestimmten Eingangssignalen (IoPF, IoGF) zu messen, die an den Eingang des Elektronenvervielfachers (4) angelegt werden, um die anzuwendenden Werte des Verstärkungs- (10) und des Offset-Parameters (11) der Steuerschaltung (6) aus den Werten der gemessenen Signale und dem bestimmten Wert des Exponenten (b, B) zu berechnen.

4. Lecksucher nach einem der Ansprüche 1 bis 3, dessen logarithmischer Kompressorverstärker (7) einen Verstärker (8) und einen logarithmischen Kompressor (9) umfasst, wobei der Ausgang (Vamp) des Verstärkers (8) am Eingang des logarithmischen Kompressors (9) empfangen wird, **dadurch gekennzeichnet, dass** die Mess- und Berechnungsmittel geeignet sind, Ausgangssignale des Verstärkers des logarithmischen Kompressors (Vamp1, Vamp2) zu messen, um ein Signal zu bestimmen, das für das Ausgangssignal (IoG) des Elektronenvervielfachers (4) repräsentativ ist.

5. Lecksucher nach einem der Ansprüche 1 bis 4, **dadurch gekennzeichnet, dass** er vorsteuerbare Mittel zum Anlegen wenigstens eines vorbestimmten Eingangssignals (Io) umfasst, und dadurch, dass er eine Verarbeitungseinheit (12) zum automatischen Vorsteuern der Mess- und Berechnungsmittel und der vorsteuerbaren Mittel und zum Realisieren des logarithmischen Kompressors (9) und der Steuerschaltung (6) durch ein Computerprogramm umfasst.

6. Lecksucher nach Anspruch 5, **dadurch gekennzeichnet, dass** er ein Mittel zur kalibrierten Einspritzung von Gas (16, 18) umfasst, das mit einem Magnetventil (17, 19) der vorsteuerbaren Mittel verbunden ist.

7. Verfahren zur Messung und Verarbeitung eines Eingangssignals, welches in einem Lecksucher nach einem der vorhergehenden Ansprüche durchgeführt wird, **dadurch gekennzeichnet, dass** der Wert des Exponenten (b, B) der exponentiellen Verstärkung des Elektronenvervielfachers (4) bestimmt wird, um die Werte des Verstärkungs- (10) und des Offset-Parameters (11) der Steuerschaltung (6) aus dem bestimmten Wert des Exponenten (b, B) zu berechnen.

8. Verfahren zur Messung und Verarbeitung nach Anspruch 7, **dadurch gekennzeichnet, dass**, um den Wert des Exponenten (b, B) der exponentiellen Verstärkung des Elektronenvervielfachers (4) zu bestimmen,

- ein vorbestimmter Strom (Io) am Eingang des Elektronenvervielfachers (4) angelegt wird,
- die Versorgungsspannung (Vm) des Vervielfachers (4) variiert wird und
- die Ausgangsspannung des Verstärkers des logarithmischen Kompressors (Vamp), die für das Ausgangssignal (IoG) des Vervielfachers (4) repräsentativ ist, gemessen wird, um den Anstieg einer linearen Beziehung zwischen der Ausgangsspannung des Verstärkers (Vamp) und der Versorgungsspannung (Vm), die dem Wert des Exponenten (b, B) der exponentiellen Verstärkung des Elektronenvervielfachers (4) entspricht, zu bestimmen.

9. Verfahren zur Messung und Verarbeitung nach einem der Ansprüche 7 oder 8, **dadurch gekennzeichnet, dass** ein für das Ausgangssignal des Elektronenvervielfachers repräsentatives Signal (Vamp1, Vamp2) und das Ausgangssignal der Versorgungseinheit (Vm1, Vm2) in Abhängigkeit von zwei vorbestimmten Eingangssignalen (IoPF, IoGF) gemessen werden, die an den Eingang des Elektronenvervielfachers (4) angelegt werden, um die anzuwendenden Werte des Verstärkungs- (10) und des Offset-Parameters (11) der Steuerschaltung (6) aus den Werten der gemessenen Signale und dem bestimmten Wert des Exponenten (b, B) zu berechnen.

## Claims

1. Leak detector comprising ionization means (1) for ionizing an incident gas flow, a mass spectrometer (2) for deflecting the ionized gas flow, a device for measuring and processing an input signal of at least two decades, comprising:

   - an electron multiplier (4) having an exponential gain as a function of its power supply voltage (Vm) and receiving said input signal (Io), the input of the electron multiplier (4) being linked to the output of the mass spectrometer (2),
   - a power supply (5) providing the power supply voltage (Vm) for said multiplier (4),
   - a control circuit (6) for the power supply (5), whose gain (10) and offset (11) parameters are adjustable and define a band for the output signal by varying the exponential gain of said multiplier (4),
   - a logarithmic compressor amplifier (7) whose output is, on the one hand, received as input for the control circuit (6) to vary the exponential gain of the electron multiplier (4) continuously over the measurement dynamic range, according to the output signal (IoG) of the electron multiplier (4), and forming, on the other hand, the output signal (Vout) of said device,

   **characterized in that** it also comprises measurement and calculation means for determining the value of the exponent (b, B) of the exponential gain of the electron multiplier (4) and for calculating the values of the gain (10) and offset (11) parameters of said control circuit (6) based on the value of said determined exponent (b, B).

2. Leak detector according to claim 1, **characterized in that** the measurement and calculation means are suitable for varying the power supply voltage (Vm) and for measuring a signal representative of the output signal (IoG) of the corresponding electron multiplier (4) for each power supply voltage (Vm), in order to calculate the value of the exponent (b, B) of the exponential gain of the electron multiplier (4) based on the measured values.

3. Leak detector according to either one of Claims 1 and 2, **characterized in that** the measurement and calculation means are suitable for measuring a signal representative of the output signal of the electron multiplier (Vamp1, Vamp2) and the output signal of the power supply (Vm1, Vm2), according to two predetermined input signals (IoPF, IoGF) applied to the input of the electron multiplier (4), in order to calculate the values of the gain (10) and offset (11) parameters of the control circuit (6) to be applied, based on the values of the measured signals and on the value of said determined exponent (b, B).

4. Leak detector according to any one of Claims 1 to 3, whose logarithmic compressor amplifier (7) comprises an amplifier (8) and a logarithmic compressor (9), the output (Vamp) of said amplifier (8) being received as input for said logarithmic compressor (9), **characterized in that** the measurement and calculation means are suitable for measuring output signals of the amplifier of the logarithmic compressor (Vamp1, Vamp2) in order to determine a signal representative of the output signal (IoG) of the electron multiplier (4).

5. Leak detector according to any one of Claims 1 to 4, **characterized in that** it comprises drivable means for applying at least one predetermined input signal (Io) and a processing unit (12) for driving said measurement and calculation means and said drivable means automatically and for implementing said logarithmic compressor (9) and the control circuit (6) by a computer program.

6. Leak detector according to Claim 5, **characterized in that** it comprises a calibrated gas injection means (16, 18) linked to a solenoid valve (17, 19) of the drivable means.

7. Method for measuring and processing an input signal implemented in a leak detector according to any one of the preceding claims, **characterized in that** the value of the exponent (b, B) of the exponential gain of the electron multiplier (4) is determined in order to calculate the values of the gain (10) and offset (11) parameters of said control circuit (6) based on the value of said determined exponent (b, B).

8. Measurement and processing method according to Claim 7, **characterized in that**, in order to determine the value of the exponent (b, B) of the exponential gain of said electron multiplier (4),

- a predetermined current (Io) is applied to the input of the electron multiplier (4),
- the power supply voltage (Vm) of said multiplier (4) is varied, and,
- the output voltage of the amplifier of the logarithmic compressor (Vamp) representative of the output signal (IoG) of said multiplier (4) is measured, so as to determine the slope of a linear relationship between the output voltage of the amplifier (Vamp) and the power supply voltage (Vm), corresponding to the value of said exponent (b, B) of the exponential gain of said electron multiplier (4).

9. Measurement and processing method according to either one of Claims 7 and 8, **characterized in that** a signal representative of the output signal of the electron multiplier (Vamp1, Vamp2) and the output signal of the power supply (Vm1, Vm2), as a function of two predetermined input signals (IoPF, IoGF) applied to the input of the electron multiplier (4), are measured, in order to calculate the values of the gain (10) and offset (11) parameters of the control circuit (6) to be applied, based on the values of the measured signals and on the value of said determined exponent (b, B).

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0402827 A